# EUROPÄISCHE PATENTSCHRIFT

(11) **EP 3 594 600 B1**
(45) Veröffentlichungstag und Bekanntmachung des Hinweises auf die Patenterteilung: **28.04.2021**
(21) Anmeldenummer: 19000318.6
(22) Anmeldetag: 04.07.2019
(51) Int. Cl.: F28D 20/00, F28D 7/12, F24T 10/17

(54) **WÄRMETAUSCHERELEMENT**
HEAT EXCHANGER ELEMENT
COMPOSANT D'ÉCHANGEUR THERMIQUE

(30) Priorität: 09.07.2018 DE 102018005394
(43) Veröffentlichungstag der Anmeldung: 15.01.2020
(73) Patentinhaber: Enerpipe GmbH, 91161 Hilpoltstein (DE)
(72) Erfinder: Heinloth, Ludwig, 91161 Hilpoltstein (DE)
(74) Vertreter: Schneider, Andreas

(56) Entgegenhaltungen:
- EP-A1- 0 267 338
- EP-A1- 2 218 975
- WO-A1-03/060389
- WO-A1-2016/066259
- DE-U1- 29 723 274

## Beschreibung

Die Erfindung betrifft ein Wärmetauscherelement nach Anspruch 1 und einen Wärmetauscher nach Anspruch 2 mit einem solchen Wärmetauscherelement sowie ein Verfahren zum Betrieb eines Wärmetauscher nach Anspruch 4. Darüber hinaus betrifft die Erfindung einen Wärmespeicher nach Anspruch 6, ein System zur Warmwasserbereitung mit einem solchen Wärmespeicher nach Anspruch 8 sowie ein Verfahren zur Warmwasserbereitung mit einem derartigen System nach Anspruch 9.

Schließlich betrifft die Erfindung auch ein Nahwärmesystem, bei dem ein solcher Wärmespeicher als Heizungspufferspeicher dient. Die Begriffe Medium und Trinkwasser (Frischwasser) werden nachfolgend teilweise synonym verwendet, ebenso wie die Begriffe Fluid und Heizungswasser (Heizwasser), wobei anstelle von Wasser für das Fluid auch andere geeignete Stoffe verwendet werden können.

Aus dem Stand der Technik ist die Verwendung thermischer Speicher (Wärmespeicher, Kältespeicher) bekannt. Im Bereich der Energieversorgung, insbesondere der Wärmeversorgung, spielen Warmwasserspeicher eine wichtige Rolle. In einem Heizsystem dient ein Warmwasserspeicher in der Regel als Pufferspeicher, d.h. er ist dazu ausgelegt, Differenzen zwischen der erzeugten und der verbrauchten Wärmemenge auszugleichen. Im Vergleich zu durchmischten Speichern ist dabei die Verwendung von Schichtspeichern besonders vorteilhaft, da durch temperaturgeschichtetes Speichern in einem Speicher das Wasser bei unterschiedlichen Temperaturen gespeichert werden kann. Schichtung bedeutet in diesem Zusammenhang, daß sich aufgrund der natürlichen Dichteunterschiede das Wasser so schichtet, daß sich das wärmste Wasser mit der geringsten Dichte oben und das kälteste Wasser mit der höchsten Dichte unten befindet. Es besteht mit anderen Worten ein Temperaturgradient zwischen heißen Schichten in einem oberen Bereich des Speichers und kalten Schichten in einem darunterliegenden Bereich des Speichers. Das Fluid liegt in horizontal übereinander liegenden Temperaturschichten vor.

Die Speichereffizienz eines solchen Schichtspeichers ist von der Qualität der thermischen Schichtung abhängig. Eine ungewollte Durchmischung der Schichten unterschiedlicher Temperatur, beispielsweise beim Einschichten von zugeführtem Fluid, würde im Ergebnis zu einer niedrigeren Speichereffizienz des Schichtspeichers führen.

Die Bereitstellung von Warmwasser ist nicht nur für das Heizsystem, sondern auch für das Trinkwassersystem (System zur Trinkwasserversorgung) von Bedeutung. Damit an einer Zapfstelle sehr schnell (typischerweise innerhalb weniger Sekunden) warmes Wasser bereitgestellt werden kann, ist bei der Versorgung mit Warmwasser die Verwendung einer Zirkulationsleitung von Vorteil, da diese nur sehr wenig Wasser enthält. In einem System zur Warmwasserbereitung (Warmwassersystem) kann eine Zirkulationsleitung dabei auf verschiedene Art und Weise versorgt werden. Üblicherweise ist die Zirkulationsleitung dabei am Kaltwasseranschluß der Frischwasserstation angebunden, so daß zunächst eine Erwärmung stattfinden muß.

Zum Erwärmen von Trinkwasser können beispielsweise Boilersysteme eingesetzt werden. Solche Boiler werden zum Zweck der Heißwasserentnahme mit einer der Boilergröße entsprechenden Wassermenge befüllt und aufgeheizt. Es erfolgt kein Durchlauf. Die Verwendung von Boilersystemen ist nachteilig, weil in einem Boiler in der Regel eine größere Menge Trinkwasser erhitzt wird, so daß es aufwendig ist, die strengen Anforderungen der Trinkwasserverordnung einzuhalten.

Alternativ dazu kann die Zirkulationsleitung aus einer Frischwasserstation versorgt werden. Es ist bekannt, das Trinkwasser hierbei durch einen Wärmetauscher zu führen, der die Wärme eines Wärmespeichers (z.B. warmes Heizungswasser) auf das Frischwasser überträgt. Von Vorteil ist dabei, daß das Trinkwasser nicht im Wärmespeicher gelagert wird, wie dies bei anderen Systemen der Fall ist. Statt dessen wird das Trinkwasser erst dann erwärmt, wenn es benötigt wird. Dazu wird das Trinkwasser im Durchfluß erhitzt, so daß im Gegensatz zu Boilersystemen die Verweilzeit im Warmwassersystem sehr gering ist.

Trotz der grundsätzlichen Vorteile, die eine Verwendung einer Zirkulationsleitung mit sich bringt, liegt es jedoch in der Natur der Sache, daß bei einer solchen Zirkulationsleitung vergleichsweise hohe Rücklauftemperaturen vorliegen.

Erfolgt nun die Erwärmung des Frischwassers während der Zirkulation mit Hilfe eines Wärmetauschers unter Verwendung eines Wärmespeichers, der in Form eines Schichtspeichers vorliegt, beispielsweise unter Verwendung eines Pufferspeichers eines Heizsystems, führt bei klassischen Zirkulationssystemen das noch sehr warme Rücklaufwasser (typischerweise 45-50°C) in der Zirkulationsleitung dazu, daß die Rücklauftemperatur im Pufferspeicher erhöht wird, so daß sich der Pufferspeicher durchmischt. Der Pufferspeicher ist dann als Wärmespeicher für ein Nahwärmenetz nicht mehr optimal nutzbar.

Dokument EP 0 267 338 A1 offenbart ein Wärmetauscherelement zur Bildung eines ersten Stoffraumes eines Wärmetauschers zur indirekten Wärmeübertragung, mit einem Mantelrohr und mit einem im Inneren des Mantelrohrs verlaufenden Sinkrohr der Stand der Technik.

Eine Aufgabe der vorliegenden Erfindung ist es, wenigstens einige der oben beschriebenen Nachteile zu beseitigen. Insbesondere ist es eine Aufgabe der Erfindung, eine schnelle Bereitstellung von Warmwasser an einer Zapfstelle zu gewährleisten, ohne dabei die Verwendbarkeit eines mit dem Warmwassersystem zum Zweck der Erwärmung des Kaltwassers gekoppelten Pufferspeichers als Wärmespeicher für ein Nahwärmenetz zu beeinträchtigen.

Diese Aufgabe wird durch die Gegenstände der unabhängigen Patentansprüche gelöst. Vorteilhafte Ausführungen der Erfindung sind in den Unteransprüchen angegeben.

Die im Folgenden im Zusammenhang mit den beschriebenen erfindungsgemäßen Vorrichtungen und Systemen erläuterten Vorteile und Ausgestaltungen gelten sinngemäß auch für die erfindungsgemäßen Verfahren und umgekehrt.

Die Erfindung schlägt vor, die Wärmetauscherfunktionalität für die Bereitstellung von Warmwasser für ein Trinkwassersystem, das eine Zirkulationsleitung aufweist, im Inneren eines Wärmespeichers eines Heizungssystems zu realisieren, nämlich mit Hilfe des erfindungsgemäßen Wärmetauscherelements. Dadurch wird verhindert, daß der Wärmespeicher durch den Rücklauf des noch immer vergleichsweise warmen Zirkulationswasser durchmischt wird, wie dies bei klassischen Zirkulationssystemen der Fall ist, bei denen das rückgeführte, noch sehr warme Wasser aus der Zirkulationsleitung einfach in das Warmwassersystem eingespeist wird, wodurch eine Mischtemperatur erzeugt wird, die das System ineffizient macht. Im Gegensatz hierzu wird bei der Erfindung trotz Anwendung eines Zirkulationssystems eine Durchmischung des Pufferspeichers vermieden, indem das Rücklaufwasser aus der Zirkulationsleitung an einer Stelle in das Wärmetauscherelement eingeschichtet wird, an der etwa auch die Pufferspeichertemperatur vorhanden ist. Es bleibt bei der Schichtung des im Pufferspeicher enthaltenen Fluids. Zugleich kann das eingeschichtete, noch warme

Rücklauf-Zirkulationswasser im Kreislauf wieder nach oben zirkulieren und sich im Wärmetauscherelement aufheizen. Anders ausgedrückt wird mit der Erfindung ein Schichtrohr für Zirkulationsleitungen vorgeschlagen, das zusätzlich eine Wärmetauscherfunktion aufweist.

Mit der beschriebenen Zirkulation werden auch die Anforderungen der Trinkwasserverordnung erfüllt (hohe Vorlauftemperaturen usw.) . Mit Hilfe des erfindungsgemäßen Wärmetauscherelements ist dies insbesondere auch in Verbindung mit Pufferspeichern eines Nahwärmenetzes möglich, insbesondere mit solchen Pufferspeichern, die ein kleines Volumen sowie eine große Temperaturspreizung aufweisen (z. B. 75°C Vorlauf und 20-30°C Rücklauf), wobei die Pufferspeicher vorzugsweise dezentral in einzelnen Gebäuden untergebracht sind. Bei solchen niedrigen Rücklauftemperaturen können auch die Abstrahlverluste im Wärmenetz verringert werden, da aufgrund des geringeren Volumenstromes Rohre mit geringem Durchmesser verwendet werden können.

Kann diese Temperaturspreizung trotz der Verwendung einer Zirkulationsleitung für die Warmwasserbereitstellung beibehalten werden, wie dies durch die Verwendung des erfindungsgemäßen Wärmetauschers möglich ist, dann kann das gesamte Nahwärmenetz besonders effizient arbeiten. Unter anderem kann ein solches erfindungsgemäßes Nahwärmenetz dann in den Sommermonaten auch für längere Zeit vollständig ausgeschaltet werden.

Das erfindungsgemäße Wärmetauscherelement kann, ebenso wie die erfindungsgemäße Zirkulationsleitung, auch bei bereits bestehenden Warmwassersystemen nachgerüstet werden.

Ein Ausführungsbeispiel der Erfindung wird nachfolgend anhand der Zeichnungen näher erläutert. Hierbei zeigen:
- Fig. 1: eine Darstellung einer Frischwasserstation nach dem Stand der Technik, wobei die Flußrichtung mit Pfeilen angegeben ist,

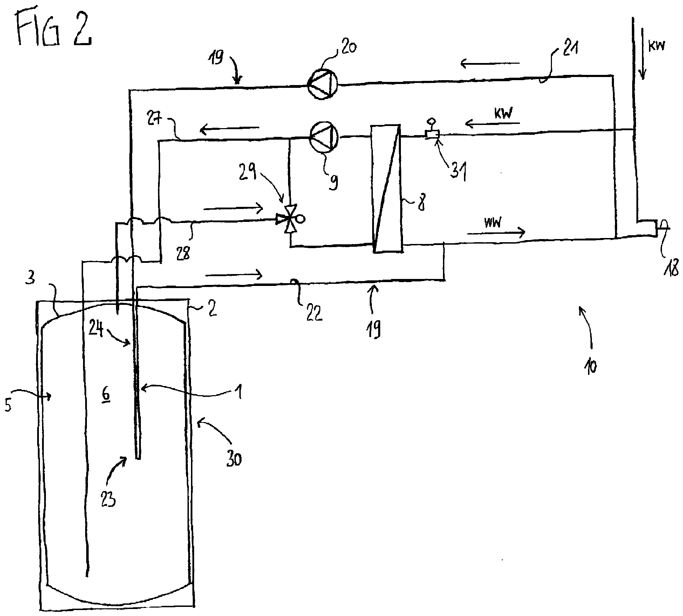

- Fig. 2: eine Darstellung einer Frischwasserstation mit dem erfindungsgemäßen Zirkulationssystem,

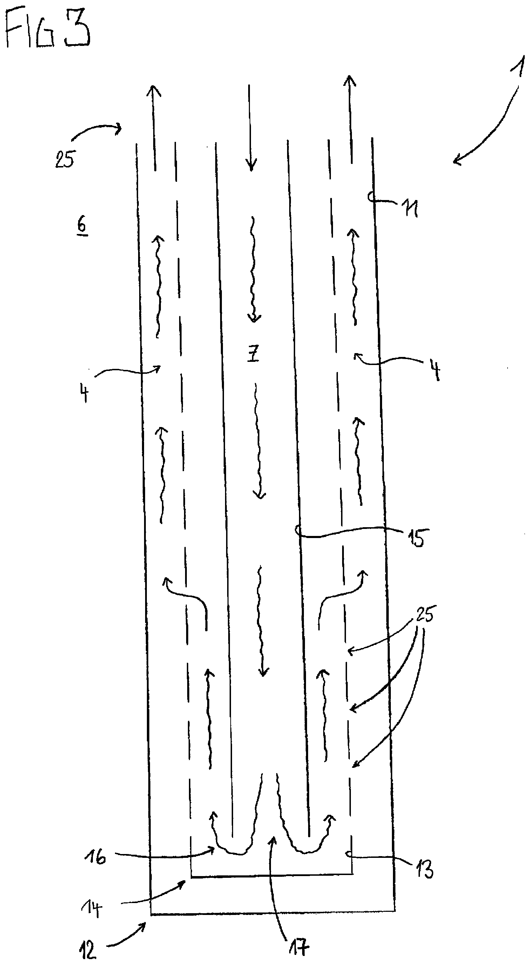

- Fig. 3: eine Darstellung eines erfindungsgemäßen Wärmetauscherelements (Längsschnitt).

Sämtliche Figuren zeigen die Erfindung nicht maßstabsgerecht, dabei lediglich schematisch und nur mit ihren wesentlichen Bestandteilen. Gleiche Bezugszeichen entsprechen dabei Elementen gleicher oder vergleichbarer Funktion.

Ein Wärmetauscher überträgt thermische Energie von einem Stoffstrom auf einen anderen Stoffstrom. Im vorliegenden Fall arbeitet der Wärmetauscher mittels indirekter Wärmeübertragung, d.h. es erfolgt kein stofflicher Austausch. Statt dessen gibt es zwei Stoff räume. Diese sind räumlich durch die wärmedurchlässige Wand des Wärmetauscherrohres (Mantelrohr) eines Wärmetauscherelements voneinander getrennt. Es erfolgt ein Wärmeaustausch zwischen den beiden Stoffräumen.

Der Wärmetauscher 30 wird gebildet durch das Wärmetauscherelement 1 einerseits, das den ersten Stoffraum 4 zur Verfügung stellt, und den Speicherbehälter (Tank) 3 eines Wärmespeichers 2 andererseits, der den zweiten Stoffraum 5 bildet.

Bei dem Wärmespeicher 2 handelt es sich um einen als Schichtspeicher aufgebauten Heizungspufferspeicher, der als Wärmespeicher eines Nahwärmesystems dient und ein wärmespeicherndes Fluid 6 (wie z.B. Wasser) enthält. Unter einem Nahwärmesystem wird dabei ein System verstanden, das mehrere Gebäude über ein Nahwärmenetz mit Wärme zu Heizzwecken versorgt, wobei die Übertragung der Wärme nur über verhältnismäßig kurze Strecken erfolgt. Oftmals findet dabei die Wärmeerzeugung unmittelbar vor Ort statt, häufig in den zu beheizenden Objekten selbst oder in deren unmittelbarer Nähe.

Das Wärmetauscherelement 1 umfaßt ein Mantelrohr (Wärmetauscherrohr) 11, dessen eines Ende 12 geschlossen ist. Es umfaßt außerdem ein im Inneren des Mantelrohres 11 verlaufendes Schichtrohr (Steigrohr) 13 zum Einschichten eines Mediums 7 in den Zwischenraum zwischen Schichtrohr 13 und Mantelrohr 11, wobei dieser Zwischenraum den ersten Stoffraum 4 des Wärmetauschers bildet. Das dem geschlossenen Ende 12 des Mantelrohres 11 zugewandte Ende 14 des Schichtrohres 13 ist ebenfalls geschlossen. Das Wärmetauscherelement 1 umfaßt darüber hinaus ein im Inneren des Schichtrohres 13 verlaufendes Sinkrohr 15 zum Zuführen des Mediums 7 in das Schichtrohr 13, wobei sich an demjenigen Ende 16 des Sinkrohres 15, das dem geschlossenen Ende 12 des Mantelrohres 11 zugewandt ist, eine Auslaßöffnung 17 befindet oder diese Ende als offenes Endes des Sinkrohres 15 ausgebildet ist.

Das Wärmetauscherelement 1 ist von oben bzw. schräg von der Seite in den Speicherbehälter 3 eingebracht derart, daß es vertikal oder im wesentlichen vertikal oder mit einem nicht zu vernachlässigendem vertikalen Anteil in dem Speicherbehälter 3 angeordnet ist. Dabei ist der vertikale Anteil zumindest so groß ist, daß das mit Hilfe des Sinkrohres 15 vorzugsweise von oben zugeführte Medium 7 eine Aufsteigbewegung vollführen kann.

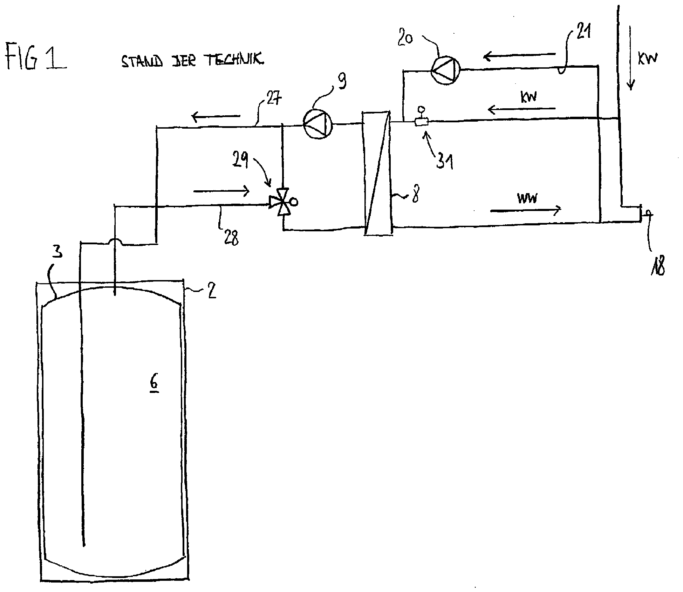

Das hier beschriebene System zur Warmwasserbereitung (Warmwassersystem) 10 umfaßt, wie bereits bisher bei einer in Fig. 1 illustrierten herkömmlichen Frischwasserstation üblich, den Primärleitungskreis mit einem mit dem Wärmespeicher 2 gekoppelten Plattenwärmetauscher 8 zum Erwärmen des Kaltwassers mit Hilfe eines Heizwasser-Kreislaufes (Rücklauf 27 und Vorlauf 28) sowie einer Pumpe 9 auf der Heizungsseite. Außerdem umfaßt das Warmwassersystem 10 eine Zapfstelle 18 für Warmwasser sowie eine Zirkulationsleitung 19 mit Zirkulationspumpe 20 zum Zirkulieren von Frischwasser zur schnellen Bereitstellung von Warmwasser für die Zapfstelle 18. Das besondere dabei ist, daß die Frischwasser-Zirkulationsleitung 19 durch den Speicherbehälter 3 des Wärmespeichers 2 verläuft.

Das erfindungsgemäße Verfahren zur Warmwasserbereitung zeichnet sich dadurch aus, daß das in der Zirkulationsleitung 19 enthaltene, von der Zapfstelle 18 rückgeführte Medium (Zirkulationswasser) 7 dem Schichtrohr 13 des Wärmetauscherelements 1 zugeführt wird. Mit anderen Worten wird das sich im Rücklauf 21 der Zirkulationsleitung 19 befindende Zirkulationswasser (abgekühltes Warmwasser) in das Wärmetauscherelement 1 eingeleitet. Die Zirkulationsleitung 19 verläuft als Sinkrohr 15 im Inneren des Schichtrohres 13 und endet im Bereich des unteren Endes 14 des Schichtrohres 13. Hier tritt das Zirkulationswasser 7 aus dem Sinkrohr 15 im Bereich des Bodens des Schichtrohres 13 in das Schichtrohr 13 aus. Mit anderen Worten wird zum Betrieb des Wärmetauschers das einzuschichtende Medium 7 dem Schichtrohr 13 an dessen unteren Ende 14 mit Hilfe des Sinkrohres 15 zugeführt.

Der sich im Inneren des Wärmetauscherelements 1 befindende erste Stoffraum 4, nämlich der das Schichtrohr 13 umgebende Zwischenraum zwischen Schichtrohr 13 und Mantelrohr 11, ist aufgrund des Temperaturangleichs mit dem das Wärmetauscherelement 1 umgebenden Fluid 6 im Inneren des Speicherbehälters 3 ebenfalls geschichtet; mit anderen Worten liegt dort das Zirkulationswasser 7 in horizontal übereinander liegenden Temperaturschichten vor.

Da in dem unteren Bereich des Mantelrohres 11 des Wärmetauscherelements 1 aufgrund der wärmedurchlässigen Wand des Mantelrohres 11 im Inneren des Wärmetauscherelements 1 in etwa die gleichen Temperaturverhältnisse herrschen, wie außerhalb des Wärmetauscherelements 1 im Speicherbehälter 3, und dort (in einem unteren Bereich 23 des Speicherbehälters 3) kälteres Wasser 6 vorherrscht, strömt das aus der Zirkulationsleitung 19 in das Schichtrohr 13 ausgetretene Zirkulationswasser 7 zunächst in dem Schichtrohr 13 nach oben, bevor es in Abhängigkeit von Temperatur und Dichte des außen am Schichtrohr anstehenden 13 Wassers im Mantelrohr 11 aus dem Schichtrohr 13 in das Mantelrohr 11 austritt. Anders ausgedrückt steigt das einzuschichtende Medium, nämlich das Zirkulationswasser 7, im Schichtrohr 13 nach oben und wird von dem Schichtrohr 13 in das Mantelrohr 11 eingeleitet (eingeschichtet) und zwar selbsttätig exakt in diejenige Mediumschicht des ersten Stoffraumes 4, in der die Dichten des einzuspeichernden Mediums und des eingespeicherten Mediums und damit deren Temperaturen gleich sind. Unnötige Wasserzirkulation und damit verbundene Mischvorgänge sowie Energieverluste innerhalb des Wärmetauscherelements 1 werden vermieden. Insbesondere bleibt es im unteren Bereich 23 des Pufferspeichers bei einer für den Nahwärmenetz-Rücklauf vorteilhaften niedrigen Temperatur von ca. 25-30°C, so daß bei einer Nahwärmenetz-Vorlauftemperatur von ca. 65-75°C die Temperaturspreizung so groß ist, daß das Volumen des Pufferspeichers 3 vergleichsweise gering gehalten werden kann, beispielsweise bei ca. 250-300 Liter in einem Gebäude wie einem Einfamilienhaus (etwa halb so groß wie bei herkömmlichen Pufferspeichersystemen) .

Zum Einschichten des Mediums 7 in das Mantelrohr 11 weist das Schichtrohr 13 eine Mehrzahl in Rohrlängsrichtung voneinander beabstandeter Austrittsöffnungen 25 auf. Vorzugsweise weisen diese Auslässe 25 in verschiedene radiale Richtungen in den ersten Stoffraum 4. Die Austrittsöffnungen 25 können eine beliebige Form aufweisen. Auch in Rohrlängsrichtung verlaufende, schlitzförmige Öffnungen 25 sind möglich. Den Öffnungen 25 können Ventilelemente (beispielsweise Flatter-, Folien-, Zungen- oder Schnüffelventile) zugeordnet sein (nicht abgebildet), die sich aufgrund von Druckunterschieden auf den beiden Ventilseiten, in Durchlaßrichtung öffnen und sich selbsttätig wieder schließen.

Nach dem Einschichten steigt das Zirkulationswasser 7 in dem das Schichtrohr 13 umgebenden Bereich des Mantelrohres 11 weiter nach oben (wobei in diesem oberen Bereich 24 des Speicherbehälters 3 wärmeres Wasser 6 vorherrscht), wobei sich das Zirkulationswasser am Mantelrohr 11 erwärmt und, entsprechend dem Temperaturverlauf des Fluids 6 im Wärmespeicher 2 außerhalb des Mantelrohres 11 mehr und mehr Wärme aufnimmt, je weiter es sich am Mantelrohr 11 entlang nach oben bewegt. Während des Durchströmens dieses Bereiches wird die Wärmetauscherfunktion realisiert. Das wärmere Fluid 6 aus dem Heizungsspeicher 2 gibt Wärmeenergie an das Medium (Zirkulationswasser) 7 im Inneren des Wärmetauscherelements 1 ab.

Am oberen Ende 25 des Wärmetauscherelements 1, an dem zugleich die entsprechenden Anschlüsse des Sinkrohres 15 und des Mantelrohres 11 an den Rücklauf 21 und den Vorlauf 22 der Zirkulationsleitung 19 vorgesehen sind (nicht im einzelnen dargestellt), tritt das Zirkulationswasser 7, vorzugsweise mit einer Temperatur von mindestens 60°C, aus dem Wärmetauscherelement 1 aus und in den an das Wärmetauscherrohr 11, genauer gesagt den ersten Stoffraum 4, angeschlossenen Vorlauf 22 der Zirkulationsleitung 19 ein, von wo aus das so erhitzte Frischwasser 7 in der Nähe der Zapfstelle 18 der Warmwasserleitung 26 (des Primärleitungskreises) zugeführt wird. Das an der Zapfstelle 18 abgezapfte Wasser hat dann vorzugsweise eine Temperatur von mindestens 55°C. Das an der Zapfstelle 18 nicht abgezapfte Warmwasser gelangt über den Rücklauf 21 der Zirkulationsleitung 19 mit Hilfe der Zirkulationspumpe 20 erneut in das Wärmetauscherelement 1, genauer in das Sinkrohr 15, das funktional das Endstück des Rücklaufs 21 darstellt.

Im Ergebnis wurde das Zirkulationswasser 7 des Zirkulationsrücklaufs 21 am Wärmetauscherrohr 11 erwärmt und damit für den Zirkulationsvorlauf 22 vorgewärmt, ohne daß hierdurch der Tank 3 durchmischt wurde, und in einem Kreislauf bis zur Zapfstelle 18 geführt.

Das in dem Mantelrohr 11 verlaufende Schichtrohr 13 ist vorzugsweise aus Kunststoff hergestellt oder einem anderen geeigneten, thermisch gering leitenden Material, um eine notwendige thermische Trennung des Schichtrohrinnenraumes von dem Mantelrohrinnenraum 4 zu ermöglichen. Gleiches gilt für das Sinkrohr 15. Das Mantelrohr 11 hingegen, das den ersten Stoffraum 4 von dem zweiten Stoffraum 5 trennt, ist vorzugsweise aus einem Material mit guter Wärmeleitfähigkeit hergestellt, so daß der gewünschte Wärmeaustausch zwischen den beiden Stoffräumen 4, 5 stattfinden kann.

Alle als Rohr bezeichneten Konstruktionselemente sind vorzugsweise als selbsttragende Körper, nämlich in Gestalt starrer oder flexibler Rohre mit beliebigem Querschnitt ausgeführt, dabei vorzugsweise mit im wesentlichen unveränderbaren Querschnittsflächen.

Allgemein beschreibt die Erfindung eine neuartige Zirkulation für Warmwassersysteme 10, insbesondere in Verbindung mit Frischwasserstationen. Eine besondere Innovation stellt in diesem Zusammenhang die Kombination eines Schichtrohres 13 mit einem Wärmetauscherrohr 11 dar.

Alle in der Beschreibung, den nachfolgenden Ansprüchen und der Zeichnung dargestellten Merkmale können sowohl einzeln als auch in beliebiger Kombination miteinander erfindungswesentlich sein.

### Bezugszeichenliste

- 1: Wärmetauscherelement
- 2: Wärmespeicher, Schichtspeicher
- 3: Speicherbehälter, Tank
- 4: erster Stoffraum
- 5: zweiter Stoffraum
- 6: Fluid, Heizwasser
- 7: Medium, Trinkwasser
- 8: Plattenwärmetauscher
- 9: Pumpe für den Primärleitungskreis
- 10: Warmwassersystem
- 11: Mantelrohr, Wärmetauscherrohr
- 12: geschlossenes, untere Ende des Mantelrohres
- 13: Schichtrohr, Steigrohr
- 14: unteres Ende des Schichtrohres
- 15: Sinkrohr, Ende des Zirkulationsrücklaufes
- 16: unteres Endes des Sinkrohres
- 17: Auslaß
- 18: Zapfstelle
- 19: Zirkulationsleitung
- 20: Zirkulationspumpe
- 21: Rücklauf der Zirkulationsleitung
- 22: Vorlauf der Zirkulationsleitung
- 23: unterer oder tiefergelegener Bereich des Tankes
- 24: oberer oder höhergelegener Bereich des Tankes
- 25: oberes Ende des Wärmetauscherelements
- 26: Warmwasserleitung
- 27: Rücklauf des Primärleitungskreises
- 28: Vorlauf des Primärleitungskreises
- 29: Mischer
- 30: Wärmetauscher
- 31: Durchflußschalter
- KW: Kaltwasser
- WW: Warmwasser

## Patentansprüche

1. Wärmetauscherelement (1) zur Bildung eines ersten Stoffraumes (4) eines Wärmetauschers (30) zur indirekten Wärmeübertragung,
- mit einem Mantelrohr (11),
- mit einem im Inneren des Mantelrohres (11) verlaufenden Schichtrohr (13) zum Einschichten eines Mediums (7) in den Zwischenraum zwischen Schichtrohr (13) und Mantelrohr (11), welcher Zwischenraum den ersten Stoffraum (4) des Wärmetauschers (30) bildet, und
- mit einem im Inneren des Schichtrohres (13) verlaufenden Sinkrohr (15), zum Zuführen des Mediums (7) in das Schichtrohr (13) .

2. Wärmetauscher (30) zur indirekten Wärmeübertragung, mit einem ersten Stoffraum (4), gebildet durch den Zwischenraum zwischen Schichtrohr (13) und Mantelrohr (11) eines Wärmetauscherelements (1) nach Anspruch 1, und mit einem zweiten Stoffraum (5), gebildet durch einen Speicherbehälter (3), der ein Schichtspeicher zur Aufnahme eines wärmespeichernden Fluids (6) ist.

3. Wärmetauscher (30) nach Anspruch 2, **dadurch gekennzeichnet, daß** das Wärmetauscherelement (1) von oben bzw. schräg von der Seite in den Speicherbehälter (3) eingebracht ist derart, daß es vertikal oder im wesentlichen vertikal oder mit einem nicht zu vernachlässigendem vertikalen Anteil in dem Speicherbehälter (3) angeordnet ist.

4. Verfahren zum Betrieb eines Wärmetauschers (30) nach Anspruch 2 oder 3, wobei
- das einzuschichtende Medium (7) dem Schichtrohr (13) mit Hilfe des Sinkrohres (15) zugeführt wird,
- das Medium (7) im Schichtrohr (13) nach oben steigt und sich aus dem Schichtrohr (13) in das Mantelrohr (11) einschichtet, und
- sich das aus dem Schichtrohr (13) in das Mantelrohr (11) eingeschichtete Medium (7) weiter in Richtung des oberen Endes (25) des Mantelrohres (11) bewegt und sich dabei an dem Mantelrohr (11) weiter erwärmt.

5. Verfahren nach Anspruch 4, wobei das einzuschichtende Medium (7) aus dem Rücklauf (21) einer Zirkulationsleitung (19) eines Systems (10) zur Warmwasserbereitung stammt.

6. Wärmespeicher (2) in Form eines Schichtspeichers, mit einem Speicherbehälter (3) zur Aufnahme eines wärmespeichernden Fluids (6) und mit einem in dem Speicherbehälter (3) angeordneten Wärmetauscherelement (1) nach Anspruch 1, wobei der Speicherbehälter (3) einen zweiten Stoffraum (5) eines Wärmetauschers (30) zur indirekten Wärmeübertragung bildet.

7. Nahwärmesystem, mit wenigstens einem als Heizungspufferspeicher dienenden Wärmespeicher (2) nach Anspruch 6.

8. System (10) zur Warmwasserbereitung,
- mit einer Zapfstelle (18) für Warmwasser,
- mit einer Zirkulationsleitung (19) zur Bereitstellung von Warmwasser für die Zapfstelle (18), und
- mit einem Wärmespeicher (2) nach Anspruch 6, wobei die Zirkulationsleitung (19) durch den Speicherbehälter (3) des Wärmespeichers (2) verläuft.

9. Verfahren zur Warmwasserbereitung mit einem System (10) nach Anspruch 8, wobei das in der Zirkulationsleitung (19) enthaltene, von der Zapfstelle (18) rückgeführte Medium (7) dem Schichtrohr (13) des Wärmetauscherelements (1) zugeführt wird.

## Claims

1. Heat exchanger element (1) for forming a first substance chamber (4) of a heat exchanger (30) for indirect heat transfer,
- with a casing tube (11),
- with a layer tube (13), running inside the casing tube (11), for introducing a layer of a medium (7) into the intermediate space between the layer tube (13) and the casing tube (11), which intermediate space forms the first substance chamber (4) of the heat exchanger (30), and
- with a descending tube (15), running inside the layer tube (13), for feeding the medium (7) into the layer tube (13).

2. Heat exchanger (30) for indirect heat transfer, with a first substance chamber (4), formed by the intermediate space between the layer tube (13) and the casing tube (11) of a heat exchanger element (1) according to Claim 1, and with a second substance chamber (5), formed by a storage tank (3), which is a stratifying buffer for receiving a heat-storing fluid (6) .

3. Heat exchanger (30) according to Claim 2, **characterized in that** the heat exchanger element (1) is inserted in the storage tank (3) from above or obliquely from the side in such a way that it is arranged in the storage tank (3) vertically or substantially vertically or with a significant vertical component.

4. Method for operating a heat exchanger (30) according to Claim 2 or 3, wherein
- the medium (7) to be introduced as a layer is fed to the layer tube (13) with the aid of the descending tube (15),
- the medium (7) rises up in the layer tube (13) and leaves the layer tube (13) to form a layer in the casing tube (11), and
- the medium (7) leaving the layer tube (13) to form a layer in the casing tube (11) moves further in the direction of the upper end (25) of the casing tube (11) and is thereby heated further on the casing tube (11).

5. Method according to Claim 4, wherein the medium (7) to be introduced as a layer originates from the return (21) of a circulating line (19) of a system (10) for providing hot water.

6. Heat store (2) in the form of a stratifying buffer, with a storage tank (3) for receiving a heat-storing fluid (6) and with a heat exchanger element (1) according to Claim 1 arranged in the storage tank (3), wherein the storage tank (3) forms a second substance chamber (5) of a heat exchanger (30) for indirect heat transfer.

7. Local heating system, with at least one heat store (2) according to Claim 6, serving as a heating buffer store.

8. System (10) for providing hot water,
- with a tap (18) for hot water,
- with a circulating line (19) for providing hot water for the tap (18), and
- with a heat store (2) according to Claim 6, wherein the circulating line (19) runs through the storage tank (3) of the heat store (2).

9. Method for providing hot water by a system (10) according to Claim 8, wherein the medium (7) contained in the circulating line (19), returned from the tap (18), is fed to the layer tube (13) of the heat exchanger element (1).

## Revendications

1. Élément d'échangeur de chaleur (1) destiné à former un premier espace de matière (4) d'un échangeur de chaleur (30) pour le transfert indirect de chaleur, ledit élément comprenant
- un tube d'enveloppe (11),
- avec un tube de mise en couche (13) s'étendant à l'intérieur du tube d'enveloppe (11) et destiné à superposer un milieu (7) dans l'espace intermédiaire ménagé entre le tube de mise en couche (13) et le tube d'enveloppe (11), lequel espace intermédiaire forme le premier espace de matière (4) de l'échangeur de chaleur (30), et
- un tube de descente (15) s'étendant à l'intérieur du tube de mise en couche (13) et destiné à amener le milieu (7) jusque dans le tube de mise en couche (13).

2. Échangeur de chaleur (30) destiné au transfert indirect de chaleur et comprenant un premier espace de matière (4), formé par l'espace intermédiaire ménagé entre le tube de mise en couche (13) et le tube d'enveloppe (11) d'un élément d'échangeur de chaleur (1) selon la revendication 1, et un deuxième espace de matière (5), formé par un récipient accumulateur (3), qui est un accumulateur à couches destiné à recevoir un fluide accumulateur de chaleur (6).

3. Échangeur de chaleur (30) selon la revendication 2, **caractérisé en ce que** l'élément d'échangeur de chaleur (1) est introduit dans le récipient accumulateur (3) depuis le haut ou obliquement depuis le côté de façon à être disposé dans le récipient accumulateur (3) verticalement ou sensiblement verticalement ou avec une portion verticale non négligeable.

4. Procédé de fonctionnement d'un échangeur de chaleur (30) selon la revendication 2 ou 3,
- le milieu (7) à introduire sous forme de couche étant amené au tube de mise en couche (13) à l'aide du tube de descente (15),
- le milieu (7) montant dans le tube de mise en couche (13) et passant sous forme de couche du tube de mise en couche (13) dans le tube d'enveloppe (11), et
- le milieu (7), qui passe sous forme de couche du tube de mise en couche (13) dans le tube d'enveloppe (11), se déplaçant davantage en direction de l'extrémité supérieure (25) du tube d'enveloppe (11) et étant davantage chauffé sur le tube d'enveloppe (11).

5. Procédé selon la revendication 4, le milieu (7) à introduire sous forme de couche provenant du retour (21) d'une conduite de circulation (19) d'un système (10) de préparation d'eau chaude.

6. Accumulateur de chaleur (2) se présentant sous la forme d'un réservoir accumulateur et comprenant un réservoir accumulateur (3) destiné à recevoir un fluide accumulateur de chaleur (6) et un élément d'échangeur de chaleur (1) disposé dans le réservoir accumulateur (3) selon la revendication 1, le réservoir accumulateur (3) formant un deuxième espace de matière (5) d'un échangeur de chaleur (30) destiné au transfert de chaleur indirect.

7. Système de chauffage local comprenant au moins un accumulateur de chaleur (2) selon la revendication 6 servant d'accumulateur tampon de chauffage.

8. Système (10) de préparation d'eau chaude, comprenant
- un robinet (18) destiné à l'eau chaude,
- une conduite de circulation (19) destinée à fournir de l'eau chaude au robinet (18), et
- un accumulateur de chaleur (2) selon la revendication 6, la conduite de circulation (19) s'étendant à travers le réservoir accumulateur (3) de l'accumulateur de chaleur (2).

9. Procédé de préparation d'eau chaude au moyen d'un système (10) selon la revendication 8, le milieu (7) contenu dans la conduite de circulation (19) et retournant du robinet (18) étant amené au tube de mise en couche (13) de l'élément d'échangeur de chaleur (1).
